# EUROPÄISCHE PATENTANMELDUNG

(11) **EP 3 144 568 A1**
(43) Veröffentlichungstag der Anmeldung: **22.03.2017**
(21) Anmeldenummer: 16188535.5
(22) Anmeldetag: 13.09.2016
(51) Int. Cl.: F16J 15/44, F01D 11/02, F01D 11/12, B23K 26/342

(54) **DICHTUNGSELEMENT, DICHTUNGSSYSTEM MIT EINEM DICHTUNGSELEMENT, TURBOMASCHINE MIT EINEM DICHTUNGSSYSTEM UND VERFAHREN ZUR HERSTELLUNG EINES DICHTUNGSELEMENTS**

(30) Priorität: 15.09.2015 DE 102015217670
(71) Anmelder: Rolls-Royce Deutschland Ltd & Co KG, 15827 Blankenfelde-Mahlow (DE)
(72) Erfinder: Dr. PANNIER, Stephan, 14558 Nuthetal (DE); Dr. GÄBLER, Miklos, 14480 Potsdam (DE)
(74) Vertreter: Maikowski & Ninnemann Patentanwälte Partnerschaft mbB

(57) **Zusammenfassung**

Die Erfindung betrifft ein Dichtungselement für ein rotierendes Dichtungssystem einer Turbomaschine, wobei das Dichtungselement (1) - bei einem bestimmungsgemäßen Einbau in das Dichtungssystem - um eine Drehachse der Turbomaschine rotierbar ist, mit:
- einer ringförmigen Dichtlippe (10), die einen Mittelpunkt (M) aufweist, durch welchen - bei einem bestimmungsgemäßen Einbau des Dichtungselements (1) in das Dichtungssystem - die Drehachse verläuft, wobei die Dichtlippe (10) mindestens eine Aussparung (100) aufweist,
- mindestens einem Anstreifelement (11), welches an der Dichtlippe (10) angeordnet ist,
wobei das mindestens eine Anstreifelement (11) in der mindestens einen Aussparung (100) angeordnet ist und zumindest teilweise über die Außenkontur der Dichtlippe (10) in radialer und/oder axialer Richtung, bezogen auf die Drehachse, hervorsteht, wobei das mindestens eine Anstreifelement (11) eine Mehrzahl von Schichten (110) eines Anstreifmaterials aufweist, welches ein mit Abriebpartikeln (P) versehenes Grundmaterial (G) aufweist. Die axiale Ausdehnung zumindest einiger Schichten (110) des mindestens einen Anstreifelements (11) verkleinert sich mit zunehmendem Abstand von dem Mittelpunkt (M), so dass das mindestens eine Anstreifelement (11) zumindest abschnittsweise eine konvergente Außenkontur, in einem Querschnitt senkrecht zu der Umfangsrichtung (U) des Dichtungselements, aufweist. Die Erfindung betrifft des Weiteren ein Dichtungssystem für eine Turbomaschine mit einem solchen Dichtungselement, eine Turbomaschine mit einem solchen Dichtungssystem sowie ein Verfahren zur Herstellung eines Dichtungselements der oben genannten Art.

## Beschreibung

Die Erfindung betrifft ein Dichtungselement mit den Merkmalen des Anspruchs 1, ein Dichtungssystem für eine Turbomaschine mit den Merkmalen des Anspruchs 13, eine Turbomaschine mit einem Dichtungssystem mit den Merkmalen des Anspruchs 14 und ein Verfahren zur Herstellung eines Dichtungselements mit den Merkmalen des Anspruchs 15.

Aus der EP 1 114 241 B1 ist ein Dichtungselement für eine rotierende Fluiddichtung bekannt, wobei das Dichtungselement eine Dichtlippe aufweist. An wenigstens einer Stelle der Dichtlippe ist ein Anstreifelement derartig angeordnet, so dass das Anstreifelement radial und ein- oder beidseitig axial über die Außenkontur der Dichtlippe hervorsteht. Bei dem Anstreifelement handelt es sich um ein vorgeformtes Element, welches formschlüssig und/oder stoffschlüssig mit der Dichtlippe verbunden ist.

Die US 2007/0110562 A1 offenbart ein Dichtungselement für eine Labyrinthdichtung, welches eine Dichtlippe umfasst und eine Mehrzahl von U-förmigen Heftklammern. Die Heftklammern sind an der Dichtlippe des Dichtungselements in Aussparungen angeordnet, so dass sie zumindest teilweise über die Außenkontur der Dichtlippe hervorstehen und Anstreifelemente bilden. Auch hier handelt es sich bei den Anstreifelementen um vorgeformte Elemente, welche mit der Dichtlippe verbunden werden.

Dichtungselemente können - bei einem bestimmungsgemäßen Einbau in ein Dichtungssystem - zumindest teilweise in Kontakt mit einem Einlaufbelag kommen und dadurch hohen Belastungen ausgesetzt werden. Hierbei kann es sich sowohl um thermische Belastungen als auch um mechanische Belastungen handeln.

Insbesondere eine Dichtlippe eines Dichtungselements ist von diesen hohen Belastungen betroffen. Zu hohe thermische und/oder mechanische Belastungen können dazu führen, dass sich Risse in der Dichtlippe ausbilden.

Es ist daher notwendig das Dichtungselement, insbesondere die Dichtlippe, möglichst vor diesen Belastungen zu schützen. Dies kann beispielsweise dadurch erreicht werden, dass ein großflächiges Kontaktieren der Dichtlippe mit dem Einlaufbelag vermieden wird. Das wird im Stand der Technik dadurch umgesetzt, dass wenigstens ein Anstreifelement an der Dichtlippe angeordnet ist, welches ein Ausräumen des Einlaufbelages ermöglicht.

Durch das Ausräumen des Einlaufbelages mit dem mindestens einen Anstreifelement, wird die Belastung für die komplette Dichtlippe reduziert. Hauptsächlich kommt das Anstreifelement in Kontakt mit dem Einlaufbelag; die Dichtlippe selbst größtenteils nicht. Dadurch ist vor allem das Anstreifelement hohen Belastungen ausgesetzt.

Die aus dem Stand der Technik bekannten Anstreifelemente werden an der Dichtlippe angeordnet, um eine möglichst gute Abriebwirkung zu erzeugen, wenn das Dichtungselement in einem Dichtungssystem verwendet wird und in Berührung mit einem Einlaufbelag kommt. Die Abriebwirkung ergibt sich hierbei vor allem durch die geometrische Außenkontur der Anstreifelemente. Des Weiteren müssen die Anstreifelemente vorgefertigt vorliegen, bevor sie mit der Dichtlippe verbunden werden können.

Der vorliegenden Erfindung liegt die Aufgabe zugrunde, ein Dichtungselement, ein Dichtungssystem für eine Turbomaschine, eine Turbomaschine mit einem Dichtungssystem und ein Verfahren zur Herstellung eines Dichtungselements bereitzustellen, die einfach herzustellen bzw. einfach anzuwenden sind.

Diese Aufgabe wird erfindungsgemäß durch ein Dichtungselement mit den Merkmalen des Anspruchs 1, ein Dichtungssystem für eine Turbomaschine mit den Merkmalen des Anspruchs 13, eine Turbomaschine mit einem Dichtungssystem mit den Merkmalen des Anspruchs 14 und ein Verfahren zur Herstellung eines Dichtungselements mit den Merkmalen des Anspruchs 15 gelöst.

Das Dichtungselement ist bei bestimmungsgemäßem Einbau in das Dichtungssystem der Turbomaschine um eine Drehachse der Turbomaschine rotierbar. Das Dichtungselement umfasst hierbei eine ringförmige Dichtlippe, die beispielsweise kreisförmig ausgebildet sein kann. Die ringförmige Dichtlippe hat einen Mittelpunkt, durch den die Drehachse der Turbomaschine - bei einem bestimmungsgemäßen Einbau des Dichtungselements in das Dichtungssystem - verläuft. Das Dichtungselement kann somit um die Drehachse der Turbomaschine rotieren.

In der Dichtlippe ist wenigstens eine Aussparung eingebracht, in der mindestens ein Anstreifelement angeordnet ist. Das Anstreifelement kann beispielsweise an der Dichtlippe selbst ausgebildet werden. Das mindestens eine Anstreifelement steht hierbei zumindest teilweise über die Außenkontur der Dichtlippe hervor und zwar in axialer Richtung, also entlang der Drehachse und/oder in radialer Richtung, also senkrecht zu der Drehachse der Turbomaschine. Das wenigstens eine Anstreifelement weist ferner eine Mehrzahl von Schichten eines Anstreifmaterials auf, welches mindestens ein Grundmaterial und Abriebpartikel umfasst. Die Abriebpartikel sind mit dem Grundmaterial vermischt. Die Abriebpartikel und das Grundmaterial können eine erhöhte thermische und mechanische Widerstandsfähigkeit aufweisen, verglichen mit dem übrigen Material des Dichtungselements.

Damit ist es möglich, das Anstreifmaterial an der Dichtlippe anzuordnen und damit wenigstens ein Anstreifelement in einfacher Art und Weise auszubilden. Das wenigstens eine Anstreifelement muss nicht als vorgefertigtes Bauteil vorliegen, sondern kann an der Dichtlippe ausgebildet werden. Des Weiteren wird die Abriebwirkung des wenigstens einen Anstreifelements durch die Zusammensetzung des Anstreifmaterials, umfassend das Grundmaterial, versehen mit Abriebpartikeln, verstärkt. Die Oberfläche des mindestens einen Anstreifelements erfährt nach der Anordnung an der Dichtlippe keine weitere Bearbeitung. Hierdurch entsteht eine raue Oberfläche, insbesondere aufgrund der schichtweisen Ausbildung des mindestens einen Anstreifelements und/oder der Zusammensetzung des Anstreifmaterials.

Wie bereits einleitend beschrieben, kann das Dichtungselement- bei einem bestimmungsgemäßen Einbau in ein Dichtungssystem - zumindest teilweise in Kontakt mit einem statischen Einlaufbelag kommen und dadurch hohen Belastungen ausgesetzt werden. Durch das Anstreifelement können diese Belastungen für die Dichtlippe des Dichtungselements reduziert werden, da z.B. durch ein Ausräumen des statischen Einlaufbelags mit dem Anstreifelement die Kontaktoberfläche von Dichtlippe und statischem Einlaufbelag reduziert wird. Eine erhöhte Abriebwirkung des Anstreifelements kann das Ausräumen des statischen Einlaufbelags vereinfachen.

Unter der Abriebwirkung ist zu verstehen, dass - bei einem bestimmungsgemäßen Einbau des Dichtungselements in das Dichtungssystem - das wenigstens eine Anstreifelement Abrieb in dem statischen Einlaufbelag, welcher in der radialen Richtung dem Dichtungselement gegenüber liegt, erzeugt. Dadurch wird der statische Einlaufbelag zumindest teilweise freigeräumt und die Belastung für die übrigen Bereiche des Dichtungselements reduziert.

Es ist möglich, dass die Dichtlippe wenigstens eine Aussparung aufweist, welche beispielsweise durch eine Ausfräsung der Dichtlippe ausgebildet ist, um das mindestens eine schichtenweise ausgebildete Anstreifelement zumindest teilweise oder vollständig in der Aussparung aufzunehmen.

Die Schichten des mindestens einen Anstreifelements sind zumindest teilweise derartig ausgebildet, dass sich die axiale Ausdehnung der Schichten mit zunehmendem Abstand von dem Mittelpunkt der Dichtlippe verkleinert. Somit weist das mindestens eine Anstreifelement zumindest abschnittsweise eine Außenkontur auf, welche in einem Querschnitt senkrecht zu der Umfangsrichtung des Dichtungselements konvergent zuläuft.

Bei einer Ausführungsvariante verkleinert sich bei zumindest einigen Schichten deren Ausdehnung entlang der Umfangsrichtung mit zunehmendem Abstand von dem Mittelpunkt. Hierdurch ergibt sich in einem Querschnitt senkrecht zu der Drehachse zumindest abschnittsweise eine konvergente Außenkontur des mindestens einen Anstreifelements.

In einer Weiterbildung weist das mindestens eine Anstreifelement eine Separationsschicht zur Verbindung mit der Dichtlippe auf, um ein Separieren des Anstreifelements von der Dichtlippe zu vereinfachen. Damit kann eine Entkopplung beider Elemente erreicht werden. Gemäß weiterer Ausführungsvarianten kann das mindestens eine Anstreifelement entlang der Umfangsrichtung der Dichtlippe eine variierende Höhe aufweisen und/oder zumindest teilweise nur auf einer Seite der Dichtlippe, entlang der axialen Richtung, zumindest teilweise über die Außenkontur der Dichtlippe hervorstehen.

In einer weiteren Ausführungsform ist es möglich, dass das mindestens eine Anstreifelement in axialer Richtung nur auf einer Seite der Dichtlippe zumindest teilweise über die Außenkontur der Dichtlippe hervorsteht. Zusätzlich oder alternativ ist es möglich, dass die Oberfläche des mindestens einen Anstreifelements nach Anordnung an der Dichtlippe nicht weiter bearbeitet ist.

Diese Ausgestaltungen des mindestens einen Anstreifelements können die Abriebwirkung des mindestens einen Anstreifelements verstärken. Auch kann in einer Ausführungsvariante die Abriebwirkung durch die geometrische Ausgestaltung des Anstreifelements gezielt gesteuert werden. So lässt sich nicht nur die Stärke der Abriebwirkung des mindestens einen Anstreifelements einstellen, sondern auch die Form des ausgeräumten Bereiches des Einlaufbelags, wie zum Beispiel die Tiefe und/oder die räumliche Ausrichtung des Abriebs.

In einer weiteren Ausführungsform wird das Anstreifmaterial durch Laserauftragsschweißen (DLD Direct Laser Deposition) an der Dichtlippe angeordnet. Das Laserauftragsschweißen ermöglicht es, lokale Aufschmelzungen, beispielsweise in der Dichtlippe, zu erzeugen, in denen das Anstreifmaterial, beispielsweise in Pulverform, eingebracht werden kann, um das Anstreifmaterial stoffschlüssig mit der Dichtlippe zu verbinden. Auch ist es möglich, lokale Aufschmelzungen in Bereichen des Dichtungselements zu erzeugen, in denen bereits Anstreifmaterial an der Dichtlippe angeordnet ist und weiteres Anstreifmaterial stoffschlüssig mit dem bereits vorhandenen Anstreifmaterial und damit auch mit der Dichtlippe zu verbinden.

In einer Ausführungsform ist das Grundmaterial des Anstreifmaterials zu einem wesentlichen Anteil oder vollständig dasselbe, wie das Material der Dichtlippe. Insbesondere können das Grundmaterial sowie das Material der Dichtlippe zu einem wesentlichen Anteil oder vollständig aus einer Nickel-Basis-Legierung gebildet sein. Hierdurch kann das Anordnen des Anstreifmaterials an der Dichtlippe vereinfacht werden. In einer Ausführungsvariante kann das Grundmaterial Inco718, Inco718+, Udimet, Waspaloy und/oder RR1000 aufweisen oder ganz aus diesen Materialien bestehen. Weiterhin kann das Grundmaterial eine auf Nickel basierende Legierung, insbesondere 720Li, umfassen oder vollständig daraus bestehen. Details über eine solche 720Li-Legierung lassen sich dem folgenden Dokument entnehmen: "Tensile Properties of Ni-Based Superalloy 720Li: Temperature and Strain Rate Effects" von K. Gopinath et al., Metallurgical and Materials Transactions A, Band 39, Nummer 10, Seiten 2340-2350, DOI: 10.1007/s11661-008-9585-3.

In einer Ausführungsvariante sind die Abriebpartikel scharfkantig ausgebildet und/oder weisen eine erhöhte Härte gegenüber dem Grundmaterial auf, insbesondere können die Abriebpartikel Materialien aus Metall, Keramik und/oder Karbid umfassen. So umfassen die Abriebpartikel in einer Weiterbildung beispielsweise cBN- und/oder TiC-Partikel.

Die scharfkantigen und/oder harten Abriebpartikel vereinfachen ein Ausräumen des Einlaufbelags.

In einer weiteren Ausführungsform kann die Dichtlippe mehrere Anstreifelemente aufweisen, die beispielsweise symmetrisch entlang des Umfangs der Dichtlippe angeordnet sind. So können beispielsweise drei Anstreifelemente jeweils um 120° versetzt, oder vier Anstreifelemente jeweils um 90° versetzt entlang des Umfangs der Dichtlippe angeordnet sein.

Auch kann in einer Ausführungsform die Dichtlippe an ihrem Umfang mindestens eine, zumindest im Wesentlichen radial angeordnete Nut aufweisen, insbesondere mit Nuten in Form von Mikroschlitzen mit einer Breite zwischen 50 µm und 300 µm. Diese Nuten dienen insbesondere zum Abbau thermischer Spannungen.

Die Aufgabe wird auch durch ein Dichtungssystem für eine Turbomaschine mit den Merkmalen des Anspruchs 13 gelöst.

Eine Ausführungsform des Dichtungssystems weist einen statischen Einlaufbelag auf, welcher in radialer Richtung dem wenigstens einen Dichtungselement gegenüber liegt. Hierbei kommt bei Betrieb des Dichtungssystems das mindestens eine Anstreifelement des wenigstens einen Dichtungselements mit dem statischen Einlaufbelag in Berührung. Das mindestens eine Anstreifelement räumt hierbei den statischen Einlaufbelag wenigstens teilweise frei. Es ist möglich, dass das Anstreifelement als erstes oder als einziges Element des Dichtungssystems mit dem Einlaufbelag in Berührung kommt.

In einer Ausführungsvariante kann das Dichtungssystem als Labyrinthdichtung, insbesondere für ein Flugzeugtriebwerk, ausgebildet sein.

Die Aufgabe wird auch durch eine Turbomaschine, insbesondere ein Flugzeugtriebwerk mit den Merkmalen des Anspruchs 14 gelöst.

Die Aufgabe wird auch durch ein Verfahren mit den Merkmalen des Anspruchs 15 gelöst, wobei das Verfahren folgende Schritte umfasst:
a) Bereitstellen einer Dichtlippe.
b) Einbringen wenigstens einer Aussparung in die Dichtlippe, insbesondere durch Ausfräsen.
c) Lokalisiertes Aufschmelzen der mindestens einen Aussparung (d.h. des Dichtlippenmaterials), beispielsweise unter Verwendung eines Lasers.
d) Einbringen eines pulverförmigen Anstreifmaterials, umfassend ein Grundmaterial, versetzt mit Abriebpartikeln, in den lokal aufgeschmolzenen Bereich der Aussparung und Erzeugen eines Bereichs mit erhöhter Dicke.
e) Wiederholen der Schritte c) und d) bis eine erste Schicht des mindestens einen Anstreifelements in der mindestens einen Aussparung ausgebildet ist. Insbesondere kann diese erste Schicht als Separationsschicht dienen.
f) Lokalisiertes Aufschmelzen einer bereits ausgebildeten Schicht des mindestens einen Anstreifelements in der mindestens einen Aussparung, insbesondere mit dem Laser.
g) Einbringen des pulverförmigen Anstreifmaterials in den aufgeschmolzenen Bereich und dadurch Erzeugen eines Bereichs mit erhöhter Dicke.
h) Wiederholen der Schritte f) und g) bis eine weitere Schicht des mindestens einen Anstreifelements in der mindestens einen Aussparung ausgebildet ist, welche das Anstreifmaterial umfasst;
i) Wiederholen des Schrittes h) bis das Anstreifelement aus sukzessiven Schichten, welche das Anstreifmaterial umfassen, aufgebaut ist.

Ausführungsbeispiele werden anhand der nachfolgenden Beschreibung und Figuren dargelegt. Es zeigen:
- Figur 1A: eine prinzipielle Darstellung einer ersten Ausführungsform eines Dichtungselements mit einem Anstreifelement;
- Figur 1B: eine prinzipielle Darstellung einer zweiten Ausführungsform eines Dichtungselements mit drei Anstreifelementen;
- Figur 1C: eine prinzipielle Darstellung einer dritten Ausführungsform eines Dichtungselements mit vier Anstreifelementen;
- Figur 2A: ein Ausführungsbeispiel eines Dichtungselements mit einem schichtweise aufgebauten Anstreifelement;
- Figur 2B: das Ausführungsbeispiel aus Figur 2A im Querschnitt senkrecht zur Umfangsrichtung entlang der Ebene A-A aus Figur 2A;
- Figur 2C: das Ausführungsbeispiel aus Figur 2A im Querschnitt senkrecht zur Umfangsrichtung entlang der Ebene B-B aus Figur 2A;
- Figur 3A: ein weiteres Ausführungsbeispiel eines Dichtungselements mit einem schichtweise aufgebauten Anstreifelement;
- Figur 3B: das Ausführungsbeispiel aus Figur 2A im Querschnitt senkrecht zur Umfangsrichtung entlang der Ebene A-A aus Figur 2A;
- Figur 3C: das Ausführungsbeispiel aus Figur 2A im Querschnitt senkrecht zur Umfangsrichtung entlang der Ebene B-B aus Figur 2A;
- Figur 3D: das Ausführungsbeispiel aus Figur 2A im Querschnitt senkrecht zur Umfangsrichtung entlang der Ebene C-C aus Figur 2A;
- Figur 4: eine weitere Ausführungsvariante eines Dichtungselements mit wenigstens einem Anstreifelement im Querschnitt senkrecht zur Umfangsrichtung;
- Figuren 5A bis 5C: zeigen drei verschiedene Stadien während der Ausbildung eines schichtweise aufgebauten Anstreifelements an einer Dichtlippe in perspektivischer Ansicht;
- Figuren 6A bis 6D: zeigen vier verschiedene geometrische Ausführungsvarianten des mindestens einen Anstreifelements;
- Fig. 7: eine Ausführungsform einer Dichtlippe mit einer Nut, insbesondere zum Abbau thermischer Spannungen.

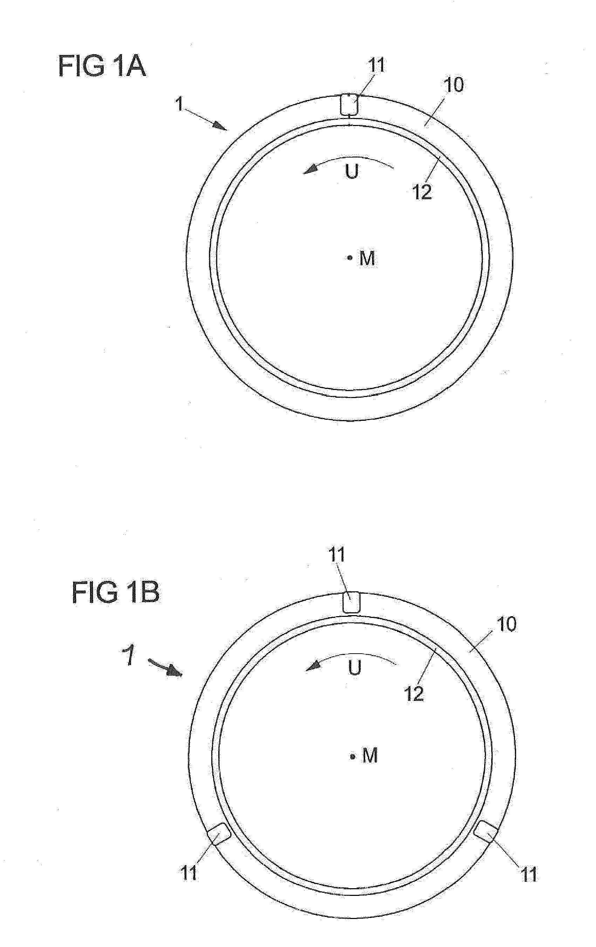

In Figur 1A ist die prinzipielle Anordnung eines Ausführungsbeispiels eines Dichtungselements 1 dargestellt. Das Dichtungselement 1 umfasst eine ringförmige Dichtlippe 10, welche mit einer ringförmigen Basis 12 verbunden ist. Die ringförmige Basis 12 und die ringförmige Dichtlippe 10 sind hierbei kreisförmig ausgebildet und weisen einen gemeinsamen Mittelpunkt M auf, wobei die Basis 12 innerhalb der Dichtlippe 10 angeordnet ist.

Bei einem bestimmungsgemäßen Einbau des Dichtungselements in ein Dichtungssystem einer Turbomaschine verläuft die Drehachse der Turbomaschine durch den Mittelpunkt M, senkrecht zur Bildebene. Die Drehachse definiert hierbei eine axiale Richtung. Die radiale Richtung verläuft senkrecht zur Drehachse. Im Folgenden beziehen sich alle Richtungsangaben auf einen bestimmungsgemäßen Einbau des Dichtungselements in ein Dichtungssystem einer Turbomaschine.

Des Weiteren ist eine Umfangsrichtung U definiert, welche entgegen des Uhrzeigersinns, entlang der Bewegungsrichtung des Dichtungselements 1 - bei einem bestimmungsgemäßen Einbau in das Dichtungssystem und bei Betrieb des Dichtungssystems - verläuft. Grundsätzlich ist es auch möglich, dass die Drehrichtung andersherum definiert wird.

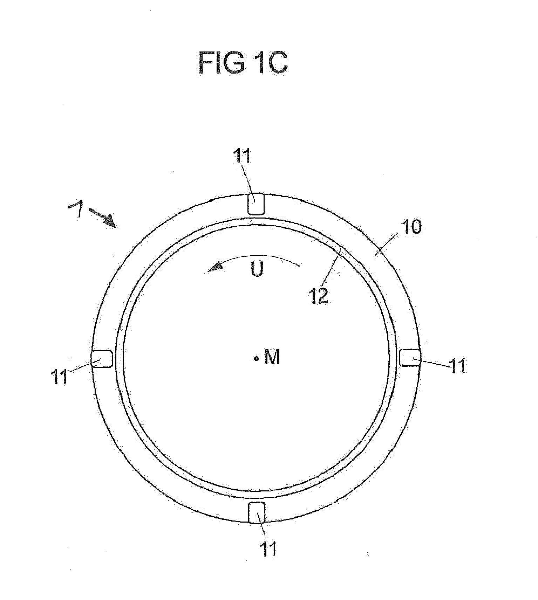

In der Ausführungsform gemäß Figur 1A ist an der Dichtlippe 10 ein Anstreifelement 11 angeordnet. In den Figuren 1B und 1C sind weitere Ausführungsbeispiele eines Dichtungselements 1 dargestellt. Sie unterscheiden sich von dem Ausführungsbeispiel in Figur 1A dadurch, dass sie eine Mehrzahl von Anstreifelementen 11 aufweisen. In der Ausführungsform gemäß Figur 1B sind drei Anstreifelemente 11 um jeweils 120° versetzt an der Dichtlippe 10 angeordnet.

In der Ausführungsform gemäß Figur 1C sind vier Anstreifelemente 11 jeweils um 90° versetzt an der Dichtlippe 10 angeordnet.

In hier nicht dargestellten Ausführungsbeispielen können auch zwei oder mehr als vier Anstreifelemente 11 an der Dichtlippe 10 angeordnet sein, wobei die Anordnung rotationssymmetrisch oder asymmetrisch sein kann.

In Fig. 1A und auch den weiteren Darstellungen ist die Dichtlippe 10 so angeordnet, dass die Dichtwirkung radial nach außen hin wirkt. Grundsätzlich ist es aber auch möglich, dass die Dichtlippe 10 ihre Dichtwirkung radial nach innen hin entfaltet.

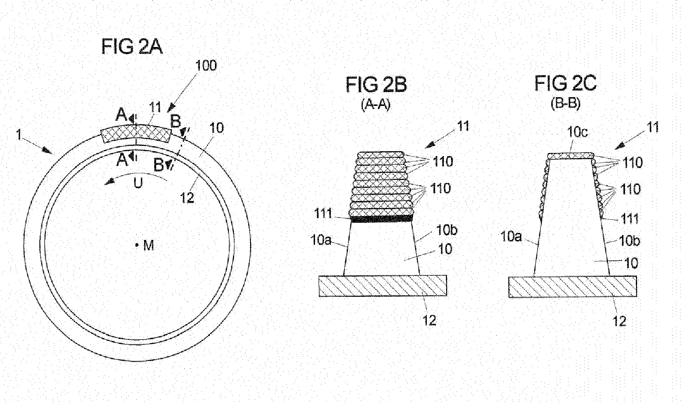

In Figur 2A, 2B und 2C ist ein Ausführungsbeispiel des Dichtungselements 1 dargestellt, das z.B. gemäß der Fig. 1A, 1B oder 1C angeordnet sein kann.

Hierbei ist das Anstreifelement 11 in einer Aussparung 100 der Dichtlippe 10 angeordnet. Das Anstreifelement 11 steht sowohl radial als auch beidseitig axial zumindest teilweise über die Außenkontur der Dichtlippe 10 hervor. In Figur 2B ist ein Querschnitt senkrecht zur Umfangsrichtung U entlang der Ebene A-A aus Figur 2A gezeigt und in Figur 2C ein Querschnitt senkrecht zu Umfangsrichtung U entlang der Ebene B-B aus Figur 2A. Die Ebene A-A verläuft radial und mittig durch das Anstreifelement 11. Die Ebene B-B verläuft radial und durch einen Bereich der Dichtlippe 10, der außerhalb des Anstreifelements 11 liegt und zwar entlang der Umfangsrichtung U kurz vor dem Anstreifelement 11.

Die Dichtlippe 10 weist in dem Querschnitt senkrecht zu der Umfangsrichtung U eine gleichschenklige, symmetrische, trapezförmige Kontur auf, wobei die beiden Seitenschenkel 10a, 10b in radialer Richtung, mit zunehmendem Abstand von dem Mittelpunkt M spitz zulaufen, d.h. sie bilden eine konvergente Außenkontur.

Die Unterseite der Dichtlippe 10 wird durch die Basis 12 des Dichtungselements 1 gebildet, wobei die Basis 12 mit ihrem rechteckigen Querschnitt in axialer Richtung eine größere Ausdehnung als die Dichtlippe 10 aufweist. Die Oberseite 10c der Dichtlippe 10 verläuft parallel zu der Basis 12.

In Figur 2C ist nochmals dargestellt, dass das Anstreifelement 11 über die Außenkontur der Dichtlippe 10 hervorsteht.

Die Aussparung 100 ist als Ausfräsung der Dichtlippe 10 ausgebildet. Sie nimmt einen Teil des Dichtlippenmaterials weg, erstreckt sich aber nicht bis zur Basis 12 des Dichtungselements 1. Auch die folgenden Ausführungsbeispiele haben alle die gleiche Dichtlippen- und Basisstruktur und die Aussparungen 100 sind auch wie in diesem Ausführungsbeispiel ausgebildet. Prinzipiell sind aber auch andere geometrische Anordnungen möglich.

Das Anstreifelement 11 weist mehrere Schichten 110 aus Anstreifmaterial auf, wobei das Anstreifmaterial ein Grundmaterial G, versehen mit Abriebpartikeln P, aufweist.

Die erste Schicht des Anstreifelements 11, welche mit der Dichtlippe 10 verbunden ist, kann eine Separationsschicht 111 bilden. Die Separationsschicht 111 kann das Anstreifelement 11 von der Dichtlippe 10 entkoppeln.

Auf diese Separationsschicht 111 folgen mehrere Schichten 110, welche in ihrer axialen Ausdehnung mit zunehmendem radialem Abstand vom Mittelpunkt M kleiner werden. Hierdurch ergibt sich eine zumindest abschnittsweise spitz zulaufende, trapezartige Außenkontur des Anstreifelements 11.

Die Schichten 110, 111 des Anstreifelements 11 stehen beidseitig axial über die Außenkontur der Dichtlippe 10 hervor. In radialer Richtung weist das Anstreifelement 11 eine derartige Anzahl von Schichten 110 mit einer entsprechenden Dicke auf, so dass zumindest eine Schicht teilweise über die Außenkontur der Dichtlippe 10 in radialer Richtung hervorsteht.

In einigen Ausführungsbeispielen kann die erste Schicht des Anstreifelements 11 identisch mit den weiteren Schichten 110 des Anstreifelements 11 ausgebildet sein.

Die Schichten 110, 111 des Anstreifelements 11 sind durch Laserauftragsschweißen des Anstreifmaterials stoffschlüssig miteinander und mit der Dichtlippe 10 verbunden. Dies gilt auch für alle weiteren Ausführungsbeispiele mit einem schichtweisen Aufbau des Anstreifelements 11, sofern nichts Gegenteiliges ausgeführt wird.

Da die Oberfläche des Anstreifelements 11 nach Anordnung an der Dichtlippe 10, in der Aussparung 100, nicht weiter bearbeitet wurde, weist sie eine Rauigkeit auf, die sich insbesondere durch den schichtweisen Aufbau und die Abriebpartikel P ergibt. Alle Unebenheiten an der Oberfläche des Anstreifelements 11, welche sich durch das Anordnen des Anstreifelements 11 an der Dichtlippe 10 ergeben, werden nicht nachträglich ausgebessert.

Die Abriebpartikel P sind scharfkantige Partikel welche eine erhöhte Härte gegenüber dem Grundmaterial G aufweisen. Abriebpartikel P können z.B. cBN-Partikel und/oder TiC-Partikel umfassen.

Die Abriebpartikel P sind hier und im Folgenden lediglich symbolisch dargestellt und können unterschiedlichste, regelmäßige sowie unregelmäßige, insbesondere willkürliche geometrische Formen annehmen. Auch ist davon auszugehen, dass bei den folgenden Ausführungsbeispielen nie eine Nachbearbeitung des Anstreifelements 11, insbesondere von dessen Oberfläche, nach Anordnung an der Dichtlippe 10, stattgefunden hat.

Das Grundmaterial kann hierbei aus dem gleichen Material wie die Dichtlippe 10 bestehen. Das Grundmaterial G kann eine Nickel-Basis-Legierung aufweisen, wie z.B. Inco718, Inco718+, Udimet, Waspaloy und/oder RR1000 oder ganz aus diesen Legierungen bestehen.

Durch die Zusammensetzung des Anstreifmaterials aus einem Grundmaterial, versetzt mit Abriebpartikeln P, kann sich, vor allem durch die Abriebpartikel P, eine erhöhte Abriebwirkung des Anstreifelements 11 ergeben. Auch Rauigkeiten der Oberfläche des Anstreifelements 11, welche sich im Verlauf der Anordnung des Anstreifelements 11 an der Dichtlippe 10 ergeben, können zu einer verstärkten Abriebwirkung führen.

Durch das zumindest teilweise Hervorstehen des Anstreifelements 11 über die Außenkontur der Dichtlippe 10 kann - bei einem bestimmungsgemäßen Einbau des Dichtungselements in ein Dichtungssystem - ein (hier nicht dargestellter) Einlaufbelag durch das Anstreifelement 11 zumindest teilweise ausgeräumt werden, so dass die Dichtlippe 10 selbst kaum oder sogar überhaupt nicht mit dem Einlaufbelag in Kontakt kommt.

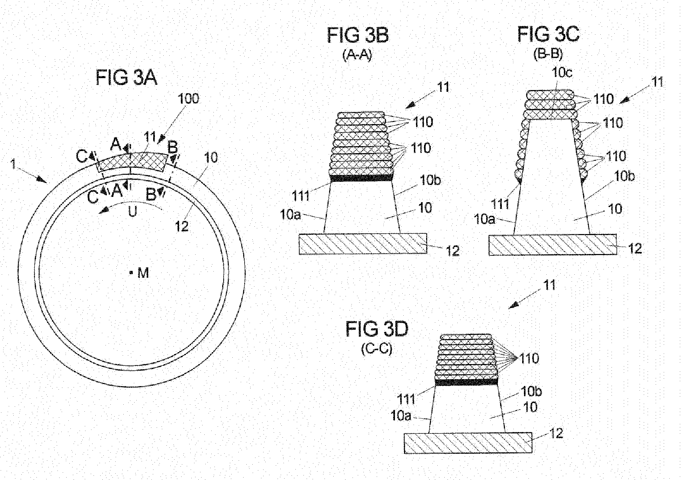

In den Figuren 3A bis 3D ist eine Ausführungsvariante des Dichtungselements 1 dargestellt, bei der das Anstreifelement 11 eine Abwandlung der Ausführungsvariante gemäß der Figuren 2A bis 2C ist. Grundsätzlich kann auf die Beschreibung der Figuren 2A bis 2C Bezug genommen werden. So sind insbesondere die Schnittebenen A-A und B-B wie in Fig. 2A gewählt.

In Figur 3D ist ein Querschnitt entlang der Schnittebene C-C aus Figur 3A dargestellt. Die Schnittebene C-C verläuft durch das Anstreifelement 11, aber an dessen äußerem linken Rand (siehe Fig. 3A).

Das Anstreifelement 11 steht sowohl in axialer, als auch in radialer Richtung über die Außenkontur der Dichtlippe 10 hervor.

Ein Unterschied zur Ausführungsvariante gemäß der Figuren 2A bis 2C liegt darin, dass das Anstreifelement 11 entlang der Umfangsrichtung U eine variierende radiale Höhe aufweist. Entlang der Umfangsrichtung U nimmt die radiale Höhe des Anstreifelements 11 hier ab (siehe z.B. Fig. 3A).

Ein weiterer Unterschied liegt darin, dass auch in axialer Richtung die Schichten 110 des Anstreifelements 11 eine variierende Ausdehnung entlang der Umfangsrichtung U aufweisen. So nimmt die axiale Ausdehnung der Schichten 110 innerhalb jeder Schicht 110 entlang der Umfangsrichtung U ab.

Auch nimmt die axiale Ausdehnung der verschiedenen Schichten 110 analog zu der vorhergehenden Ausführungsvariante aus den Figuren 2A bis 2C von Schicht zu Schicht mit zunehmendem radialen Abstand vom Mittelpunkt M ab. Das Anstreifelement 11 weist auch wiederum eine Separationsschicht 111 auf, die die restlichen Schichten 110 von der Dichtlippe 10 trennt.

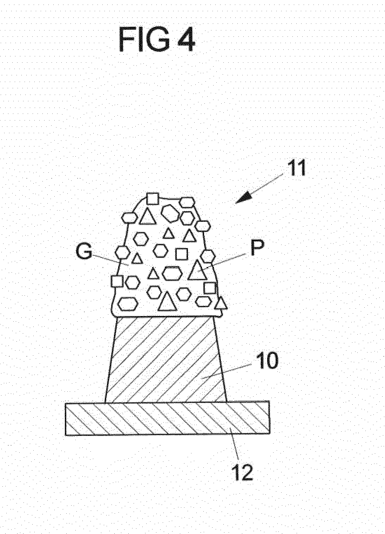

In Figur 4 ist beispielsweise ein Querschnitt senkrecht zur Umfangsrichtung U durch ein Dichtungselement 1 im Bereich mindestens eines Anstreifelements 11 dargestellt. Das Anstreifelement 11 ist hierbei in einer hier nicht sichtbaren Aussparung 100 der Dichtlippe 10 angeordnet. Das Anstreifelement 11 umfasst ein Anstreifmaterial, welches ein Grundmaterial G, versetzt mit Abriebpartikeln P, umfasst. Es sind bei dieser Darstellung keine Schichten 110 zu erkennen, das Anstreifelement 11 wurde aber schichtenweise ausgebildet. In weiteren Ausführungsformen kann das Anstreifelement 11 auch nur eine Schicht aufweisen und homogen aus dem Anstreifmaterial ausgebildet sein.

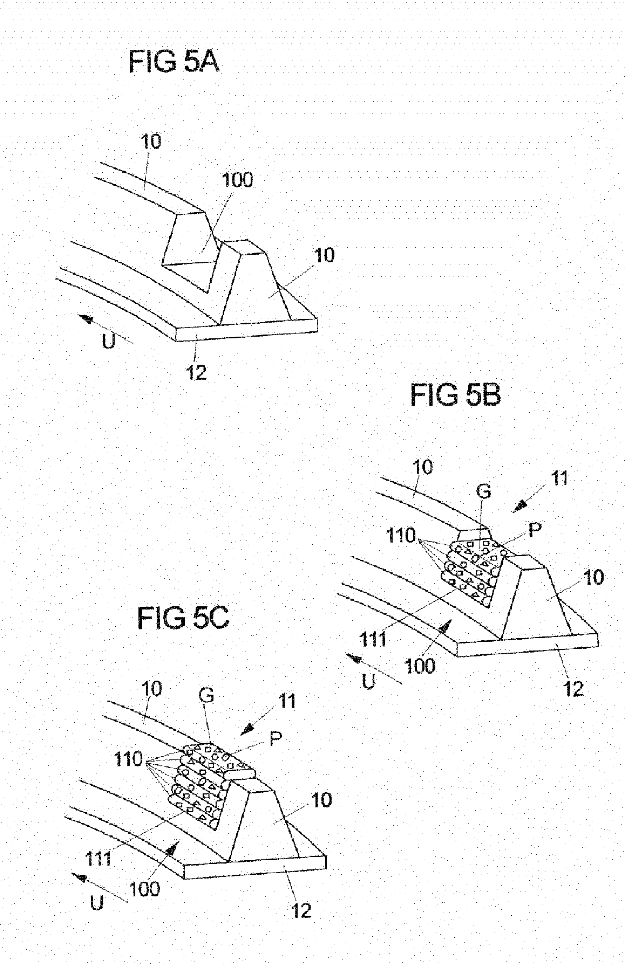

In den Figuren 5A bis 5C ist eine perspektivische Ansicht eines Ausschnitts einer Ausführungsvariante eines Dichtungselements 1 dargestellt, wobei der Ausschnitt den Bereich des Dichtungselements 1 zeigt, in dem sich eine Aussparung 100 befindet. Die drei Figuren zeigen dabei drei unterschiedliche Stadien während der Ausbildung des Anstreifelements 11 an der Dichtlippe 10.

Bei dieser Ausführungsvariante ist das fertige Anstreifelement 11 schichtenweise in der Aussparung 100 der Dichtlippe 10 ausgebildet. Die Dichtlippe 10 ist mit einer Basis 12 des Dichtungselements 1 verbunden.

In Figur 5A ist das Stadium gezeigt, bei dem bereits die Aussparung 100 in der Dichtlippe 10 eingebracht wurde, aber noch keine Schichten des Anstreifelements 11 in der Aussparung 10 angeordnet sind. In Figur 5C ist das Stadium gezeigt, bei dem das Anstreifelement 11 vollständig in der Aussparung 100 ausgebildet ist. Figur 5B zeigt ein Zwischenstadium zwischen den in Figuren 5A und 5C gezeigten Stadien, bei dem bereits einige Schichten des Anstreifelements 11 in der Aussparung 100 ausgebildet sind, aber das Anstreifelement 11 noch nicht vollständig ausgebildet ist.

Die Schichten des Anstreifelements 11 werden durch schichtweises Laserauftragsschweißen des Anstreifmaterials in der Aussparung 100 ausgebildet. Das Anstreifmaterial umfasst dabei ein Grundmaterial, versetzt mit Abriebpartikeln P.

In einer weiteren, hier nicht dargestellten Ausführungsform kann das Anstreifelement 11, das schichtweise aus dem Anstreifmaterial 10 ausgebildet ist, auch in einer Aussparung 100 ausgebildet sein, die bis zur Basis 12 des Dichtungselements 1 vordringt. Somit kann das Anstreifelement 11 auch direkt mit der Basis 12 verbunden sein, da im Bereich der Aussparung 100 kein Material der Dichtlippe 10 übrig ist.

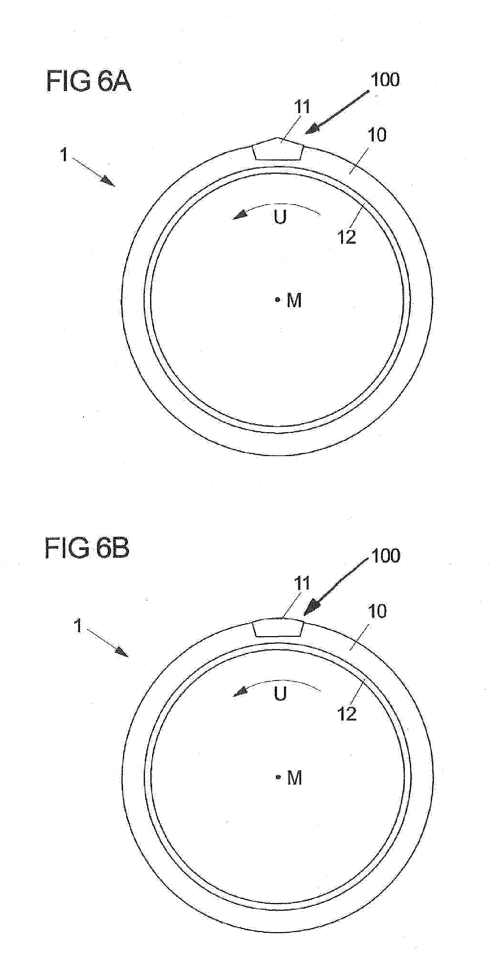

In den Figuren 6A bis 6D sind vier verschiedene Ausführungsvarianten eines Dichtungselements 1 dargestellt, welche sich jeweils durch die geometrische Ausformung des mindestens einen Anstreifelements 11 unterscheiden. Die vier Figuren zeigen das Dichtungselement 1 jeweils in einer Querschnittsebene senkrecht zur Drehachse D.

In Figur 6A weist das Anstreifelement 11 abschnittsweise eine gleichschenklige, dreiecksförmige Kontur auf, die in radialer Richtung über die Außenkontur der Dichtlippe 10 hervorsteht.

In Figur 6B weist das Anstreifelement 11 abschnittsweise eine bogenförmige Kontur auf, die in radialer Richtung über die Außenkontur der Dichtlippe 10 hervorsteht.

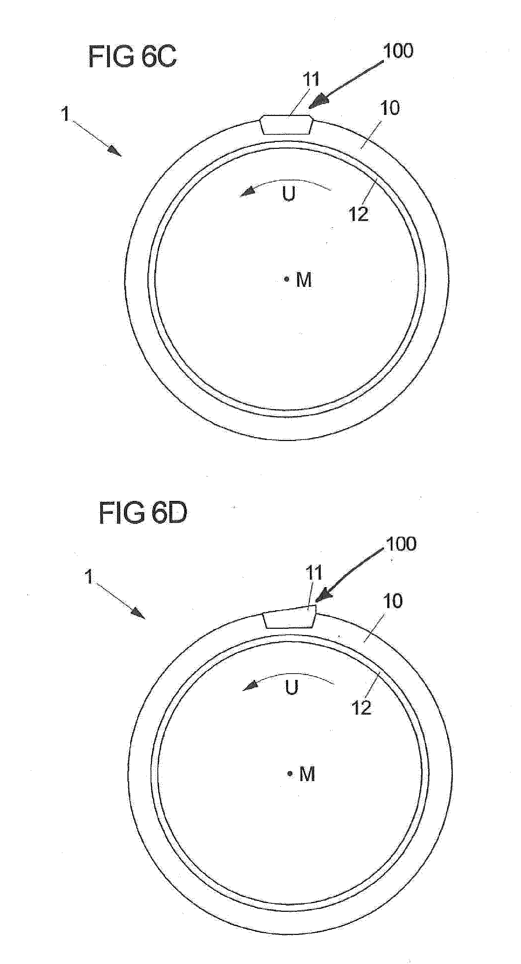

In Figur 6C weist das Anstreifelement 11 abschnittsweise eine trapezförmige Kontur auf, die in radialer Richtung über die Außenkontur der Dichtlippe 10 hervorsteht.

In Figur 6D weist das Anstreifelement 11 abschnittsweise eine spitzwinklig zulaufende dreieckförmige Kontur auf, wobei sich der kleinste Winkel entlang der Umfangsrichtung U am vordersten Ende befindet. Die radiale Ausdehnung des Anstreifelements 11 nimmt entgegen der Umfangsrichtung U zu. Dadurch entsteht eine Art Messerform.

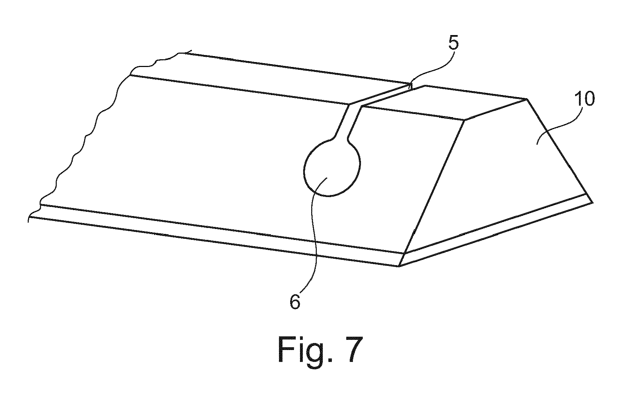

In Fig. 7 ist eine Dichtlippe 10 dargestellt, in der eine im Wesentlichen radial angeordnete, schlitzartige Nut 5 angeordnet ist. Der Schlitz weist in Umfangsrichtung eine Breite zwischen 50 und 300 µm auf. In radialer Richtung erstreckt sich die Nut über die gesamte Höhe der Dichtlippe 10.

Am Fußbereich der Nut 5 ist eine Ausnehmung 6 angeordnet, die z.B. als Bohrung ausgebildet sein kann. Damit kann u.a. eine Rissausbreitung verhindert oder minimiert werden.

Die Nut 5 ist in der dargestellten Ausführungsform parallel zur Drehachse der Dichtung angeordnet. In alternativen Ausführungsformen kann die Orientierung der Nuten 5 auch gegenüber der Drehachse geneigt ausgebildet sein.

Aus Gründen der Einfachheit ist hier nur eine einzige Nut 5 dargestellt, wobei grundsätzlich eine Vielzahl solcher Nuten 5 verwendet werden kann. Die Nuten 5 können dabei regelmäßig oder auch unregelmäßig über den Umfang verteilt sein.

Es wird darauf hingewiesen, dass die Merkmale der einzelnen beschriebenen Ausführungsbeispiele der Erfindung miteinander kombiniert werden können.

### Bezugszeichenliste

- 1: Dichtungselement
- 5: Nut, Mikroschlitz
- 6: Ausnehmung an Nut
- 10: Dichtlippe
- 10a: Seitenschenkel der Dichtlippe
- 10b: Weiterer Seitenschenkel der Dichtlippe
- 10c: Oberseite der Dichtlippe
- 100: Aussparung in der Dichtlippe

- 11: Anstreifelement
- 110: Schichten des Anstreifelements
- 111: Separationsschicht

- 12: Basis

- U: Umfangsrichtung
- G: Grundmaterial
- P: Abriebpartikel
- M: Mittelpunkt der Dichtlippe

## Patentansprüche

1. Dichtungselement für ein rotierendes Dichtungssystem einer Turbomaschine, wobei das Dichtungselement (1) - bei einem bestimmungsgemäßen Einbau in das Dichtungssystem - um eine Drehachse der Turbomaschine rotierbar ist, mit:
- einer ringförmigen Dichtlippe (10), die einen Mittelpunkt (M) aufweist, durch welchen - bei einem bestimmungsgemäßen Einbau des Dichtungselements (1) in das Dichtungssystem - die Drehachse verläuft, wobei die Dichtlippe (10) mindestens eine Aussparung (100) aufweist,
- mindestens einem Anstreifelement (11), welches an der Dichtlippe (10) angeordnet ist, wobei
das mindestens eine Anstreifelement (11) in der mindestens einen Aussparung (100) angeordnet ist und zumindest teilweise über die Außenkontur der Dichtlippe (10) in radialer und/oder axialer Richtung, bezogen auf die Drehachse, hervorsteht, wobei das mindestens eine Anstreifelement (11) eine Mehrzahl von Schichten (110) eines Anstreifmaterials aufweist, welches ein mit Abriebpartikeln (P) versehenes Grundmaterial (G) aufweist,
**dadurch gekennzeichnet,**
**dass** sich die axiale Ausdehnung zumindest einiger Schichten (110) des mindestens einen Anstreifelements (11) mit zunehmendem Abstand von dem Mittelpunkt (M) verkleinert, so dass das mindestens eine Anstreifelement (11) zumindest abschnittsweise eine konvergente Außenkontur, in einem Querschnitt senkrecht zu der Umfangsrichtung (U) des Dichtungselements, aufweist.

2. Dichtungselement nach mindestens einem der Ansprüche 1, **dadurch gekennzeichnet, dass** sich die Ausdehnung zumindest einiger Schichten (110) des mindestens einen Anstreifelements (11) entlang der Umfangsrichtung (U) mit zunehmendem Abstand von dem Mittelpunkt (M) verkleinert, so dass das mindestens eine Anstreifelement (11) zumindest abschnittsweise eine konvergente Außenkontur in einem Querschnitt senkrecht zu der axialen Richtung aufweist.

3. Dichtungselement nach mindestens einem der Ansprüche 1 oder 2, **dadurch gekennzeichnet, dass** das mindestens eine Anstreifelement (11) eine Separationsschicht (111) zur Verbindung mit der Dichtlippe (10) aufweist, um ein Separieren des Anstreifelements (11) von der Dichtlippe (10) zu vereinfachen.

4. Dichtungselement nach mindestens einem der Ansprüche 1 bis 3, **dadurch gekennzeichnet, dass** das mindestens eine Anstreifelement (11) entlang der Umfangsrichtung (U) der Dichtlippe (10) eine variierende Höhe aufweist.

5. Dichtungselement nach mindestens einem der vorhergehenden Ansprüche, **dadurch gekennzeichnet, dass** das mindestens eine Anstreifelement (11) in axialer Richtung nur auf einer Seite der Dichtlippe (10) zumindest teilweise über die Außenkontur der Dichtlippe (10) hervorsteht.

6. Dichtungselement nach mindestens einem der vorhergehenden Ansprüche, **dadurch gekennzeichnet, dass** die Oberfläche des mindestens einen Anstreifelements (11) nach Anordnung an der Dichtlippe (10) nicht weiter bearbeitet ist.

7. Dichtungselement nach mindestens einem der vorhergehenden Ansprüche, **dadurch gekennzeichnet, dass** das mindestens eine Anstreifelement (11) durch Laserauftragsschweißen des Anstreifmaterials hergestellt ist.

8. Dichtungselement nach mindestens einem der vorhergehenden Ansprüche, **dadurch gekennzeichnet, dass** das Grundmaterial (G) des Anstreifmaterials zu einem wesentlichen Anteil oder vollständig identisch ist mit dem Material der Dichtlippe (10) und insbesondere aus einer Nickel-Basis-Legierung gebildet ist.

9. Dichtungselement nach Anspruch 8, **dadurch gekennzeichnet, dass** das Grundmaterial als Nickel-Basis-Legierung Inco718, Inco718+, Udimet, Waspaloy und/oder RR1000 aufweisen oder ganz aus diesen Legierungen bestehen.

10. Dichtungselement nach mindestens einem der vorhergehenden Ansprüche, **dadurch gekennzeichnet, dass** die Abriebpartikel (P) scharfkantig sind und/oder eine erhöhte Härte gegenüber dem Grundmaterial (G) aufweisen, und insbesondere zumindest teilweise aus Metall, Keramik und/oder Karbid bestehen und cBN- und/oder TiC-Partikel umfassen.

11. Dichtungselement nach mindestens einem der vorhergehenden Ansprüche, **dadurch gekennzeichnet, dass** eine Mehrzahl von Aussparungen, insbesondere drei oder vier, symmetrisch entlang des Umfangs der Dichtlippe (10) angeordnet sind, wobei in jeder Aussparung ein Anstreifelement (11) ausgebildet ist.

12. Dichtungselement nach mindestens einem der vorhergehenden Ansprüche, **dadurch gekennzeichnet, dass** die Dichtlippe (10) an ihrem Umfang eine zumindest im Wesentlichen radial angeordnete Nut (5) aufweist, insbesondere mit Nuten (5) in Form von Mikroschlitzen mit einer Breite zwischen 50 µm und 300 µm.

13. Dichtungssystem für eine Turbomaschine, insbesondere eine Labyrinthdichtung, mit wenigstens einem Dichtungselement (1) nach mindestens einem der Ansprüche 1 bis 12, insbesondere mit einem statischen Einlaufbelag, welcher in der radialen Richtung dem wenigstens einen Dichtungselement (1) gegenüber liegt, so dass im Betrieb mindestens ein Anstreifelement (11) mit dem statischen Einlaufbelag in Berührung kommt und diesen zumindest teilweise freiräumt.

14. Turbomaschine, insbesondere ein Flugzeugtriebwerk, mit mindestens einem Dichtungssystem nach Anspruch 13.

15. Verfahren zur Herstellung eines Dichtungselements (1) für ein rotierendes Dichtungssystem einer Turbomaschine, insbesondere eines Dichtungselements (1) nach einem der Ansprüche 1 bis 12, folgende Schritte umfassend:
a) Bereitstellen einer Dichtlippe (10);
b) Einbringen mindestens einer Aussparung (100) in der Dichtlippe (10), insbesondere durch Ausfräsen;
c) Lokalisiertes Aufschmelzen der mindestens einen Aussparung (100), insbesondere mit einem Laser;
d) Einbringen eines pulverförmigen Anstreifmaterials, umfassend ein Grundmaterial (G) versetzt mit Abriebpartikeln (P), in den aufgeschmolzenen Bereich der Aussparung (100) und Erzeugen eines Bereichs mit erhöhter Dicke;
e) Wiederholen der Schritte c) und d) bis eine erste Schicht (110, 111) des mindestens einen Anstreifelements (11), umfassend das Anstreifmaterial, in der mindestens einen Aussparung (100) ausgebildet ist;
f) Lokalisiertes Aufschmelzen einer bereits ausgebildeten Schicht (110, 111) des mindestens einen Anstreifelements (11), insbesondere mit dem Laser;
g) Einbringen des pulverförmigen Anstreifmaterials in den aufgeschmolzenen Bereich und dadurch Erzeugen eines Bereichs mit erhöhter Dicke;
h) Wiederholen der Schritte f) und g) bis eine weitere Schicht (110) des mindestens einen Anstreifelements (11), umfassend das Anstreifmaterial, in der mindestens einen Aussparung (10) ausgebildet ist;
i) Wiederholen des Schrittes j) bis das mindestens eine Anstreifelement (11) aus sukzessiven Schichten (110), umfassend das Anstreifmaterial, aufgebaut ist.
